Europäisches Patentamt

European Patent Office

Office européen des brevets

(19)

(11) Veröffentlichungsnummer: **0 280 059 B1**

(12) # EUROPÄISCHE PATENTSCHRIFT

(45) Veröffentlichungstag der Patentschrift: **19.08.92**

(51) Int. Cl.⁵: **B23H 7/38**

(21) Anmeldenummer: **88101190.2**

(22) Anmeldetag: **27.01.88**

(54) **Elektroerosionsmachine zur Bearbeitung von ELektrisch schwach oder nicht leitenden Werkstücken.**

(30) Priorität: **25.02.87 DE 3706124**

(43) Veröffentlichungstag der Anmeldung:
**31.08.88 Patentblatt 88/35**

(45) Bekanntmachung des Hinweises auf die
Patenterteilung:
**19.08.92 Patentblatt 92/34**

(84) Benannte Vertragsstaaten:
**CH DE FR GB IT LI LU SE**

(56) Entgegenhaltungen:
**FR-A- 2 315 986**

(73) Patentinhaber: **AG für industrielle Elektronik AGIE Losone bei Locarno**

**CH-6616 Losone/Locarno(CH)**

(72) Erfinder: **Levy, Gideon, Dr.**
**Via Locarno 52**
**CH-6616 Losone(CH)**
Erfinder: **Bitonto, Di, Dr.**
**4617 Locksford Dr.**
**Bryan Texas 77802(US)**

(74) Vertreter: **EGLI-EUROPEAN PATENT ATTORNEYS**
**Widenmayerstrasse 5**
**W-8000 München 22(DE)**

EP 0 280 059 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Elektroerosionsmaschine zur Bearbeitung vom elektrisch schwach oder nichtleitenden Werkstücken mit einer Elektrode und einer ersten Energiequelle, mit der die für eine Funkenentladung erforderliche Energie erzeugbar ist, gemäß dem Oberbegriff des Anspruches 1.

Bekanntlich ist die elektrische Leitfähigkeit von Werkstükken eine wesentliche Voraussetzung dafür, daß sie elektroerosiv bearbeitet werden können. Zwar genügt eine relativ geringe Leitfähigkeit, so daß beispielsweise polykristalline Diamanten, die metallische Bindemittel enthalten, elektroerosiv bearbeitet werden können (vgl. EP-PS 0 006 827).

In der EP-A-0 131 367 (oder JP-OS 59-224 216 - Inoue-Japax) wird vorgeschlagen, auf ein schlecht leitendes Werkstück einen elektrisch leitenden Körper aufzusetzen und die Spitzen von zwei Elektroden so gegenüber der zu bearbeitenden Oberfläche des Werkstückes anzuordnen, daß Entladungen zwischen ihnen und dem elektrisch leitfähigen Körper stattfinden, wodurch ein Teil des Werkstükkes durch Abschmelzen entfernt werden soll.Hierbei handelt es sich um ein sog. "Arc welding", das ohne ein Dielektrikum stattfindet.

Aus der CH-PS 617 378 ist es bekannt, einen elektroerosiv zu schneidenden, isolierenden Körper, beispielsweise eine Quarzplatte mit einer elektrisch leitfähigen Schicht zu versehen, um diesen mittels Elektroserosion schneiden zu können. Das Aufbringen dieser Schicht ist ein zusätzlicher, mühsamer Arbeitsschritt. Weiterhin muß für die meisten Anwendungen diese Schicht nach dem Schneiden wieder entfernt werden. Das dort beschriebene Verfahren funktioniert aber nur bei sehr dünnen Schichten.

Aus der DE-OS 32 23 269 ist für das Entladungs-Schleifen von nicht leitfähigen Werkstücken bekannt, die Schleifscheibe mit abwechselnd angeordneten leitfähigen Bereichen und nicht leitfähigen Schleifbereichen auszustatten. Wird die Schleifscheibe schnell gedreht und mit Gleich- oder Wechselspannung beaufschlagt, so soll durch elektrische Induktion ein leitfähiger Zustand im ansonsten nicht leitfähigen Werkstück hervorgebracht werden, so daß auch elektrische Entladungen zwischen der Schleifscheibe und dem Werkstück stattfinden können. Durch die elektrischen Entladungen soll dabei das Werkstück allerdings nur angeschmolzen werden, während das eigentliche Abtragen durch die mechanische Bearbeitung (Zerspanung) stattfindet.

Da dieses Schleifen ohne ein Dielektrikum stattfindet muß allerdings stark angezweifelt werden, ob hier überhaupt elektroerosive Vorgänge ablaufen. Es ist daher davon auszugehen, daß diese Vorrichtung ohne elektrische Spannung genau so gut arbeitet.

Mit der vorliegenden Erfindung soll die Möglichkeit geschaffen werden, elektrisch sehr schlecht leitende oder nichtleitende Werkstücke elektroerosiv bearbeiten zu können, ohne daß das Werkstück in besonderer Weise vorher präpariert werden muß.

Diese Aufgabe wird bei einer Elektroerosionsmaschine der im Oberbegriff des Anspruches 1 angegeben Gattung durch die im Kennzeichen des Anspruches 1 angegeben Merkmale gelöst.

Der Grundgedanke der Erfindung liegt also darin, elektrisch schwach leitende oder nichtleitende Werkstücke durch Zufuhr von Energie elektrisch leitfähig zu machen. Physikalisch läßt sich dies so erklären, daß durch die Zufuhr dieser Energie die Kristallgitter oder Atome so in Schwingungen versetzt werden, daß freie Elektronen, die für eine elektrische Leitfähigkeit maßgeblich sind, entstehen. Mit anderen Worten werden durch die Energiezufuhr die Elektronen in das Valenzband gehoben. Die Energiezufuhr ist dabei so einzustellen, daß die Kristallgitter nicht zerstört werden. Es sollen lediglich Elektronen freigesetzt werde.

Obwohl alle bekannten Energiequellen, die diesen Effekt bewirken, eingesetzt werden können, werden Strahlungsenergiequellen bevorzugt und unter diesen wiederum Laser-Energiequellen. Als weitere Strahlungsarten kommen in, Frage: Infrotstrahlung, Röntgenstrahlung, $\beta$- oder $\gamma$-Strahlung.

Die Strahlungsenergie kann dabei so auf das Werkstück einwirken, daß dieses insgesamt leitfähig wird. Es ist aber auch ausreichend, das Werkstück nur in der Elektroerosions-Arbeitszone oder sogar auch nur in Teilbereichen derselben anzuregen bzw. leitfähig zu machen.

Weitere vorteilhafte Ausgestaltungen und Weiterbildungen der Erfindung sind den Unteransprüchen zu entnehmen.

Mit der Erfindung ist es möglich, selbst elektrisch nicht leitende Werkstücke, wie Quarz, Glas, Naturdiamanten usw. elektroerosiv zu bearbeiten. Das elektroerosive Bearbeiten kann dabei ein Senken oder ein Schneiden sein mit den bekannten Untervarianten wie Bohren usw. Die Werkstücke müssen vor dem elektroerosiven Bearbeitungsprozeß nicht in besonderer Weise präpariert werden, wie es beispielsweise die CH-PS 617 378 fordert.

Ein weiterer Vorteil liegt darin, daß auch bisherige Erosionsmaschinen durch Einbau einer zusätzlichen Energiequelle leicht umgerüstet werden können, so daß sie dann sowohl zum Bearbeiten von elektrisch leitfähigen als auch von elektrisch nicht leitfähigen Werkstücken geeignet sind. Bei den üblichen Vorschubgeschwindigkeiten der Elektroerosion ist die Einwirkzeit der Energiequelle ausreichend, die gewünschte Leitfähigkeit hervorzurufen, so daß auch keine Verlangsamung des Bearbeitungsprozesses eintritt.

Vorzugsweise wirkt die Energiequelle zeitlich unmittelbar vor der Elektrode auf das Werkstück ein, läuft dieser in Vorschubrichtung also voraus. Damit werden nur die im Moment benötigten Bereiche des Werkstückes elektrisch leitfähig gemacht, so daß die angewandte Energie relativ klein sein kann. Dabei ist es ausreichend, wenn die Energiequelle ihre Energie an die Oberfläche des Werkstückes abgibt. Bei Verwendung einer Strahlungsquelle muß also die Strahlung nicht direkt auf alle Bereiche des Arbeitsspaltes auftreffen.

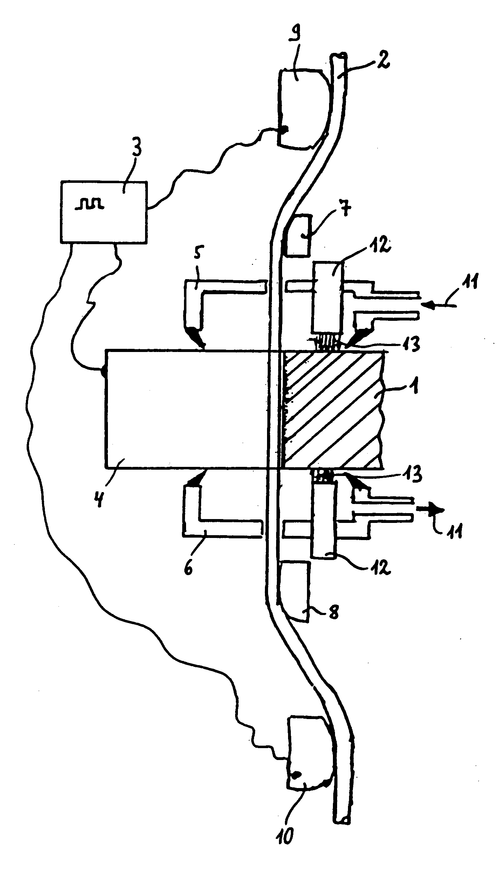

Im folgenden wird die Erfindung anhand eines Ausführungsbeispieles im Zusammenhang mit der Zeichnung ausführlicher erläutert.

Die einzige Figur zeigt eine schematische Schnittansicht der wesentlichen Teile einer Elektroerosionsmaschine nach der Erfindung anhand des Beispieles einer Drahtschneidemaschine.

Ein Werkstück 1 wird durch eine drahtförmige Elektrode 2 geschnitten, wobei das Werkstück 1 und die Drahtelektrode 2 elektrisch an einen Generator 3 angeschlossen sind, der elektrische Impulse erzeugt. In der Figur hat die Drahtelektrode 2 bereits einen Schnitt 4 durchgeführt. Beidseitig des Schnittbereiches sind Spül- bzw. Drahtführungsköpfe 5 und 6 angeordnet, wobei Drahtführungen 7 und 8 sowie Stromzuführungen 9 und 10 nur schematisch dargestellt sind. Durch eine Öffnung 11 strömt eine Spülflüssigkeit in den oberen Kopf 5, von dort durch den Arbeitsspalt in den unteren Kopf 6, wo sie durch die Öffnung 11 abgesaugt wird. Im dargestellten Ausführungsbeispiel sind in beiden Köpfen 5 und 6 Energiequellen 12 angebracht, die Energie auf die Ober- und Unterseite des Werkstückes 1 abstrahlen. Die Strahlung ist mit dem Bezugszeichen 13 bezeichnet.

Durch die von den Energiequellen 12 auf das Werkstück 1 abgestahlte Energie werden Elektronen des Werkstückes in das Valenzband gehoben, so daß das Werkstück in diesem Bereich elektrisch leitfähig ist und elektroerosiv in bekannter Weise durch die Laufdrahtelektrode 2 geschnitten werden kann. Obwohl in der Figur nicht ausdrücklich dargestellt, kann die mit dem Werkstück 1 verbundene Elektrode des Generators 3 so an das Werkstück 1 angeschlossen werden, beispielsweise über Schleifkontakte, daß sie möglichst nahe an dem durch die Energiequellen 12 beaufschlagten Bereich des Werkstückes liegen.

**Patentansprüche**

1. Elektroerosionsmaschine zur Bearbeitung vom elektrisch schwach oder nichtleitenden Werkstücken mit einer Elektrode (2) und einer ersten Energiequelle (3), mit der die für eine Funkenentladung erforderliche Energie erzeugbar ist,
dadurch gekennzeichnet,
daß eine zweite Energiequelle (12) vorgesehen ist, mit der ein zu bearbeitendes Werkstück (1) mit Energie beaufschlagbar ist,
daß das Werkstück (1) durch die von der zweiten Energiequelle (12) auftreffende Energie zumindest in Teilbereichen der Elektroerosions-Arbeitszone in einen elektrischen Leitfähigkeitszustand bringbar ist und
daß die zweite Energiequelle (12) an einem Spül- und/oder Führungskopf (5) für die Elektrode (2) angebracht ist, wodurch der Abstand zwischen der zweiten Energiequelle (12) und der Elektrode (2) konstant haltbar ist.

2. Elektroerosionsmaschine nach Anspruch 1, dadurch gekennzeichnet,
daß die zweite Energiequelle (12) so gegenüber der Elektrode (2) angeordnet ist, daß ihre Energie bezogen auf die Bearbeitungsrichtung vor der Elektrode (2) auf das Werkstück (1) auftrifft.

3. Elektroerosionsmaschine nach Anspruch 1, dadurch gekennzeichnet,
daß die zweite Energiequelle (12) so ausgebildet und angeordnet ist, daß ihre Energie koaxial rings um die Elektrode (2) auf das Werkstück (1) auftrifft.

4. Elektroerosionsmaschine nach einem der Ansprüche 1 bis 3, dadurch gekennzeichnet,
daß die zweite Energiequelle (12) vorzugsweise ein Laser ist oder eine Infrarotstrahlungsquelle, eine Röntgenstrahlungsquelle, eine $\beta$- oder $\gamma$-Strahlungsquelle.

5. Elektroerosionsmaschine nach einem der Ansprüche 1 bis 4, dadurch gekennzeichnet,
daß an zwei jeweils oberhalb und unterhalb des Werkstückes (1) angeordneten Spül- und/oder Führungsköpfen (5) je eine zweite Energiequelle (12) angebracht ist.

**Claims**

1. An electric discharge machine for machining electrically low-conducting or non-conducting workpieces having an electrode (2) and a first energy source (3) with which the energy necessary for a spark discharge can be produced, characterized in that a second energy source (12) is provided by means of which a workpiece (1) to be machined can be acted upon by energy, in that the workpiece (1) can at least in partial regions of the electroerosion working zone be brought into a state of electrical conductivity by the impacting energy from the second energy source (12), and in that the second energy source (12) is attached to a rinsing and/or guiding head (5) for the electrode (2), whereby the distance between the second energy source (12) and the electrode (2) can be kept constant.

2. An electric discharge machine in accordance with Claim 1, characterized in that the second energy source (12) is arranged in such a manner relative to the electrode (2) that its energy impacts on the workpiece (1) before the electrode (2) acts thereupon in relation to the direction of machining.

3. An electric discharge machine in accordance with Claim 1, characterized in that the second energy source (12) is constructed and arranged in such a manner that its energy impacts on the workpiece (1) coaxially around the electrode (2).

4. An electric discharge machine in accordance with any one of Claims 1 to 3, characterized in that the second energy source (12) is preferably a laser or an infrared radiation source, an X-radiation source, a $\beta$ or $\gamma$ radiation source.

5. An electric discharge machine in accordance with any one of Claims 1 to 4, characterized in that to each of two rinsing and/or guiding heads (5) arranged in each case above and below the workpiece (1) there is attached a second energy source (12).

**Revendications**

1. Machine d'électroérosion pour l'usinage de pièces à usiner non conductrices ou faiblement conductrices, munie d'une électrode (2) et d'une première source d'énergie (3), susceptible de fournir l'énergie nécessaire à une décharge à étincelles, caractérisée en ce qu'elle comporte une deuxième source d'énergie (12) avec laquelle on peut soumetre une pièce à usiner (1) à un flux d'énergie, en ce que la pièce à usiner (1) est susceptible d'être amenée à un état électriquement électroconducteur par l'énergie émise par la deuxième source d'énergie (12) au moins dans des zones partielles de la zone où l'on opère l'électroérosion et en ce que la deuxième source d'énergie (12) est montée sur une tête (5) de balayage ou de guidage pour l'électrode (2), la distance entre la deuxième source d'énergie (12) et l'électrode (2) étant ainsi susceptible d'être maintenue constante.

2. Machine d'électroérosion selon la revendication 1, caractérisée en ce que la deuxième source d'énergie (12) est disposée par rapport à l'électrode (2) de telle façon que son énergie vienne frapper la pièce à usiner (1) avant l'électrode (2), si l'on se réfère à la direction d'usinage.

3. Machine d'électroérosion selon la revendication 1, caractérisée en ce que la deuxième source d'énergie (12) est réalisée et disposée de telle façon que son énergie frappe la pièce à usiner (1) coaxialement tout autour de l'électrode (2).

4. Machine d'électroérosion selon l'une des revendications 1 à 3, caractérisée en ce que la deuxième source d'énergie (12) est de préférence un laser ou une source de rayonnement infrarouge, une source d'irradiation par rayons X, une source d'irradiation par rayons $\beta$ ou $\gamma$.

5. Machine d'électroérosion selon l'une des revendications 1 à 4, caractérisée en ce qu'une deuxième source d'énergie (12) est montée sur deux têtes (5) de balayage et/ou de guidage situées respectivement au-dessus et au-dessous de la pièce à usiner (1).